# EUROPEAN PATENT APPLICATION

(11) **EP 1 366 885 A1**
(43) Date of publication of application: **03.12.2003**
(21) Application number: 02425358.5
(22) Date of filing: 31.05.2002
(51) Int. Cl.: B29C 49/06, B29C 49/42, B29C 49/56, B29C 45/50, B29C 49/70

(54) **Moulding machine for plastic objects**

(71) Applicant: U.T.E. Progetti S.r.l., 50129 Firenze (IT)
(72) Inventor: Elmi, Gianfranco, 59100 Prato (IT); Elmi, Fabio, 59100 Prato (IT); Palloni, Marco, Prato (IT)
(74) Representative: Martini, Lazzaro

(57) **Abstract**

A moulding machine for plastic objects of the injection blow moulding type, comprising:

One plasticiser/injector assembly (2) for fluidising a raw material and injecting it into an injection mould; an injection moulding station (3) for forming an intermediate product; a blow moulding station (4) for giving the intermediate product its final shape; means for handling (5) the forming product; unloading means (6) for unloading the finished product; the plasticising/injector assembly (2), the injection moulding station (3), the blow moulding station (4) and the handling means (5) are actuated by electric motors (Fig. 1B).

## Description

The present invention concerns a moulding machine for plastic objects.

It is known that, in the sector where small plastic containers and hollow bodies are manufactured, such as flacons, pill boxes, bottles and similar, different production systems are applied. More precisely, the techniques used are injection moulding, blow moulding and injection combined with blow moulding. These techniques make it possible to produce containers of various shapes, whose production costs vary according to contingent needs.

It has been proved by experience that the most productive technique is pure injection moulding; this technique, however, involves the construction of relatively expensive moulds and the need to produce objects with the so-called "slanted" geometry to permit the extraction of moulds.

The blow moulding technique requires the construction of less expensive moulds and allows more complex shapes to be obtained; however, this process originates waste material, that is, trims due to moulding with the use of risers.

The injection blow moulding technique combines the high productivity typical of pure injection with the possibility to obtain complex shapes, like in the application of the blow moulding technique, allowing at the same time to limit production of wastes.

The machines that manufacture hollow bodies using the injection blow moulding technique carry out, in this order, the plastification of the raw material, the injection of the raw material into a mould, the production of a semi-finished product or intermediate product (the so-called "preform"), the blowing of the preform to the geometry desired, and finally the output of the finished product. The injection moulding process takes place by injecting the plastic, that is, plasticised material, into a mould composed of a top part, which shapes the corresponding part of the preform, of a central male rod, which has the internal shape of the preform, and a bottom part which, like the top part, moulds the corresponding part of the preform. The blow moulding process involves the use of another mould, also composed essentially of three parts: a top part, a central part (male rod) and a bottom part. The blow moulding process takes place by means of a compressed air jet blown through the male rod.

The typical structure of these known machines comprises a index table which revolves on a horizontal plane in order to transfer the product (first preform and finally container) via the moulding male rods through various processing stations arranged in a preestablished sequence, an extruder/injector placed radially to the index table, an injection mould with a high-power closing system, a conditioning system for preforms (not always present because applicable to some materials only), a blowing mould with a low-power closing system, a product output system, a conditioning system for male rods (not always present because applicable to some materials only). The current machines are provided with hydraulic drive and exploit the direct application of the power by means of direct drive systems like large diameter cylinders and similar apparatuses.

The application of power by hydraulic drive systems serves to drive the extruder/injector and to close the injection and blowing moulds.
In some industrial sectors, particularly where the production of containers for the pharmaceutical industry but also for the cosmetic and food industries is concerned, hydraulic drives are not admitted or are strongly opposed due to the involved hazard of contaminating the production environment.
In addition, the use of hydraulic power transmission, due to the high power involved, implies the design of hydraulic control stations and conduits not easy to build and to maintain.
Another shortcoming consists in the high noise level of these equipment, and in the disposal and storage of hydraulic oil.

The main purpose of this invention is to provide a solution to the above mentioned problems.
The result, consonant with the present invention has been reached from the idea of designing a machine with the characteristics described in claim 1. Other characteristics of the invention are described in the subordinate claims.

The advantages presented by this invention consist essentially in the following: it is possible to apply the injection blow moulding technique even in industrial sectors in which the use of hydraulic drives is prohibited or strongly discouraged, as for example in the production of containers for pharmaceutical, cosmetic and food products, where higher respect and more accurate hygiene in the working environment are the rule; it is possible to work in productive environments that require cleaning control according to the product typology; the machine noise is reduced and, consequently, the environmental impact; the problems related to the disposal and storage of the oil used in hydraulic drive systems are eliminated; the energy consumption is reduced thanks to the increased efficiency of the machine; a higher speed is obtained in the work cycle; increased flexibility is achieved thanks to this system, as well as increased possibilities for monitoring the production process; a machine designed according to this invention is relatively easy to build, economical and reliable to run even after a prolonged period of operation.

These and additional advantages and characteristics of this invention may be understood better and to a greater extent by every technician competent in the trade through the following description and with the help of drawings, enclosed for practical exemplification of the invention but not to be considered in a limitative sense, in which:
- Fig. 1A shows a schematic lateral view of the machine according to invention;
- Fig. 1B shows a schematic plan view of the machine in Fig. 1A;
- Fig. 2 shows a longitudinal sectional view of the plasticising-injecting member;
- Figs. 3A-3F show the closing and locking systems of the injection mould and, in particular, Fig. 3A shows a front view of the injection mould, Fig. 3B shows a top view of part of the mould locking systems, Fig. 3C shows a partial front view of the systems shown in Fig. 3A and a detail of the mould thickness adjusting elements, Fig. 3D is a side view of part of the mould locking system, Fig. 3E shows a partial plan view of a detail of the mould locking elements, Fig. 3F shows a partial front view of a detail of the mould locking elements;

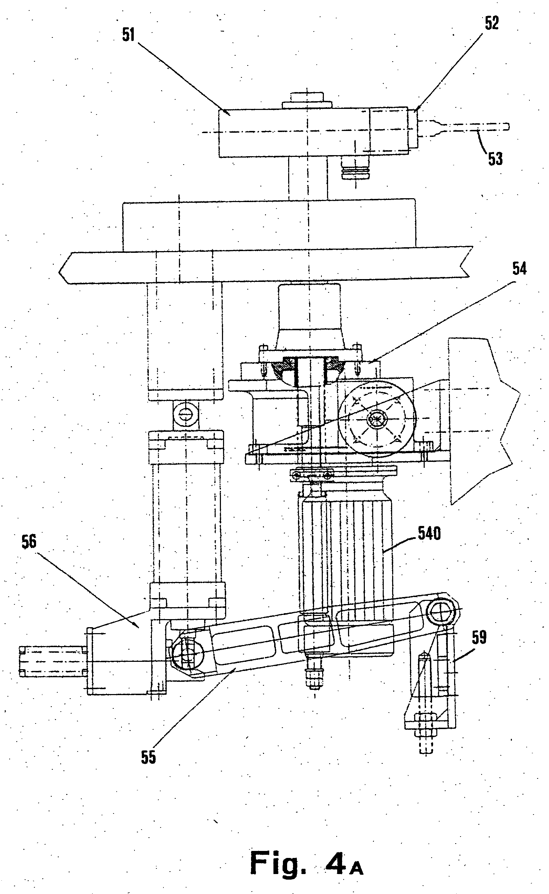

- Figs. 4A and 4B show the index table that handles the product and, in particular, Fig. 4A shows a partial side view, while Fig. 4B shows a plan view;
- Figs. 5A-5C illustrate the elements that unload the finished products and, in particular, Fig. 5A shows a partial front view of an extractor bar for product extraction, Fig. 5B shows a partially sectional plan view of the cylinders used for extracting products, Fig. 5C shows a lateral view of the details shown in Figs. 5A and 5B;
- Fig. 6 shows a side view illustrating the kinematic connection between the product index table and the drive elements of the injection station.

The following description makes mostly reference to the machine parts that are directly involved with this invention; on the drawings, these parts are identified by reference numbers. Reduced to its basic structure and with reference to the figures on the enclosed drawings, a machine (M) according to invention is composed of a bearing frame (1), capable of guaranteeing the rigidity necessary for the whole machinery and provided with guard panels (10) and access doors (11) for inspection and maintenance. The above-mentioned frame (1) supports a plasticising/injecting assembly (2) for plastification of the raw material and injection of the plasticised material into the injection mould, as better detailed in the following.

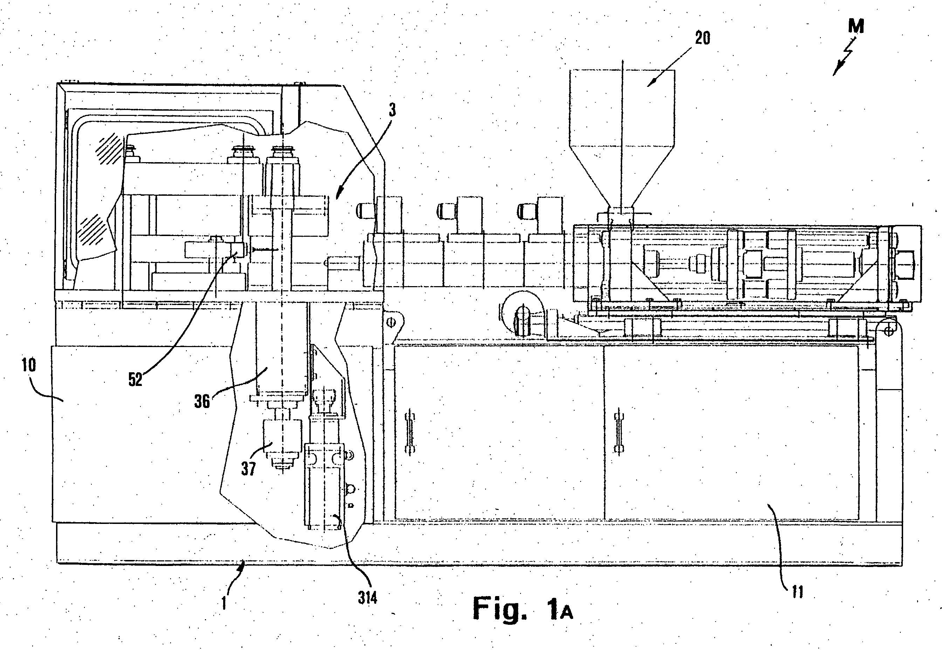

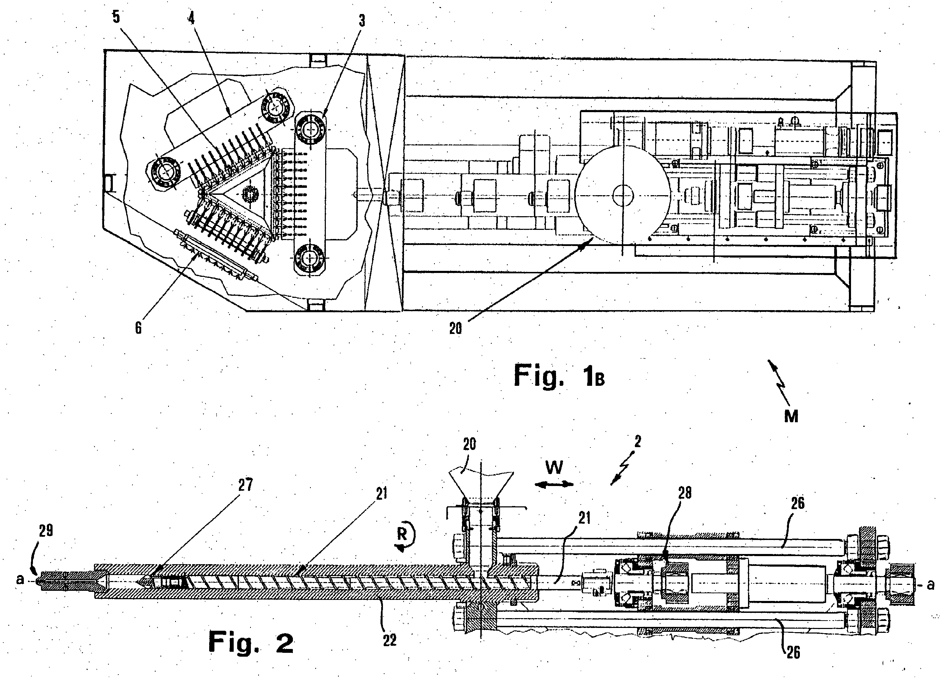

Fig. 1B illustrates an injection moulding station (3), a blow moulding station (4), handling equipment (index table, 5) for transferring the products in the course of the processing stages and unloading elements (6) for the finished products.
In particular, a machine for moulding plastic objects with the injection blow moulding technique according to this invention includes:
- a plasticising/injecting unit (2), where a raw material is fluidised and injected into an injection mould;
- an injection moulding station (3), where an intermediate product is obtained;
- a blow moulding station (4), where the intermediate product receives its final shape;
- handling means (5) for the product in course of processing;
- unloading means (6) for the finished product.

According to the present invention and as better described below, the plasticising/injecting unit (2), the injection moulding station (3), the blow moulding station (4) and the handling means (5) are driven by electric motors and are thus totally free from hydraulic type components such as, for example, cylinders, control stations, conduits, etc.
The above-mentioned assembly (2) includes elements for plastification of the raw material and injection of the plasticised material.

In particular, as visible in the construction example shown in Fig. 2, the raw material is introduced in solid state, that is, in pellets, into a feed hopper (20) standing over the frame (1). More in detail, the hopper (20) is placed on top and connected with a hollow body (22), which is subjected to the action of electric heating elements (not illustrated) and houses a reciprocating screw (21) in its inner cavity. The reciprocating screw (21) is driven by an electric motor (see arrow R, Fig. 2); it can revolve around its longitudinal axis (a-a) and be moved longitudinally along this axis (see arrow W in Fig. 2), that is, parallel to guides (26), because it is driven by an electric motor (25) connected with it by a ball screw (28).

During machine operation, the raw material in pellet form falls by gravity from the hopper (20) down to the reciprocating screw (21) inside the injector body (22). The mechanical action of the reciprocating screw (21), that is, the interaction of the reciprocating screw with the inner walls of the body (22) and the heating of the hollow body (22) turn the raw material into fluid state. The reciprocating screw (21) conveys the raw material, originally in pellets and later in fluid state, towards the injection front end (29) of the hollow body (22). At the same time, the reciprocating screw (21) retracts from the above-mentioned front end (with a movement to the right in the reference mark visible in Fig. 2), and forms, in correspondence with the above-mentioned injection end (29), a chamber (27) full of fluidised plastic. The volume of the chamber (27) can be modified depending on the type of mould into which to inject the plastic; in other words, by lengthening or shortening the excursion of the reciprocating screw (21) inside the hollow body (22), a larger or smaller volume of fluidised plastic to be injected will be determined. When the plastic is injected into the moulds, the reciprocating screw (21) will be driven in reverse direction to the one it had so far, allowing the plastic to flow from the chamber (27) into the injection moulds on the injection moulding station (3).

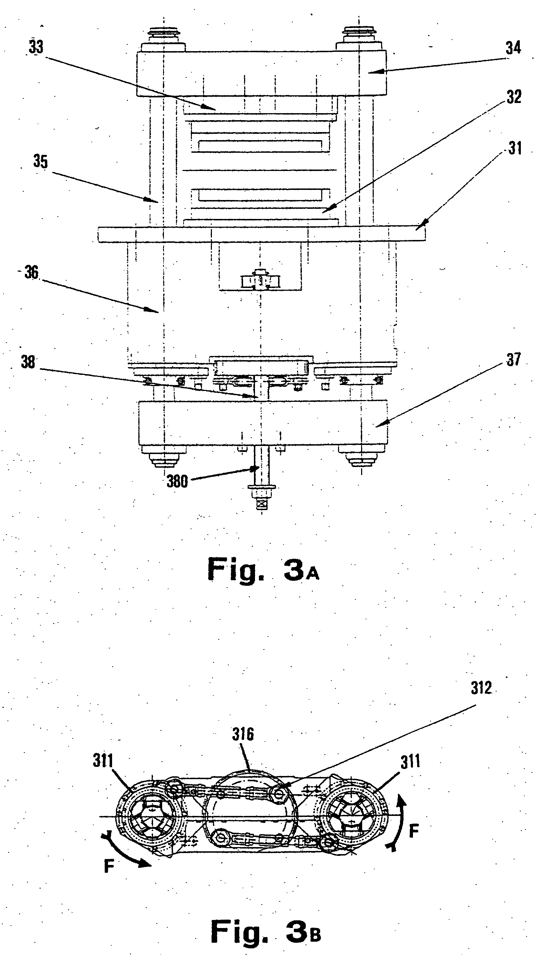

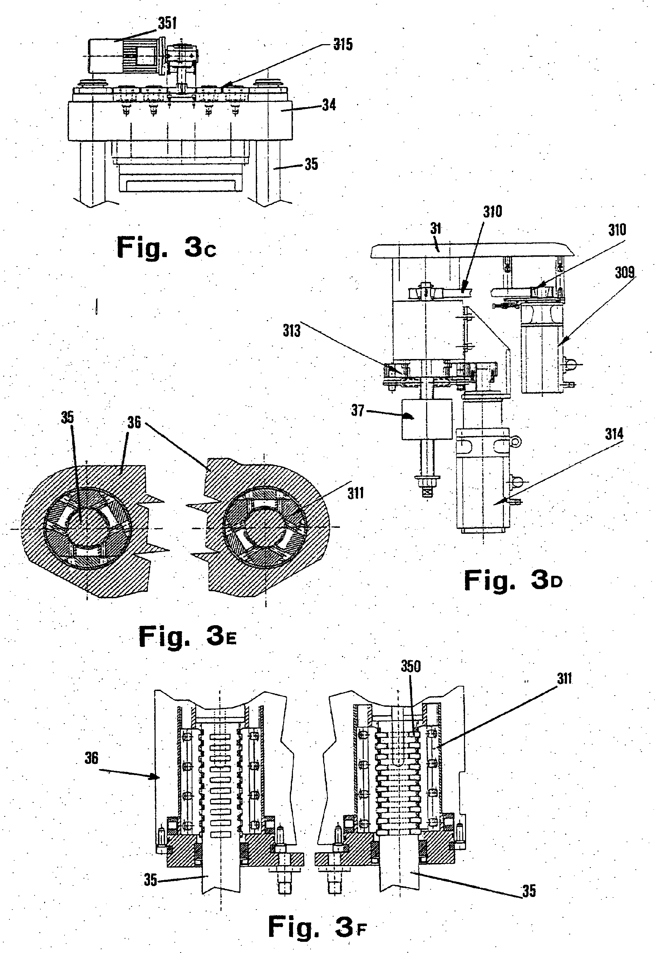

With reference to the construction example shown in Figs. 3A-3F, the injection moulding station (3) includes a mould supporting table (31), on which there rests the bottom part of the injection mould (32). A cross beam (34) supports the upper part of the injection mould (33) from the top. Under the supporting table (31) there is a block (36) with columns and, below, a lower cross beam (37). Columns (35) with wedges are arranged vertically.

In starting condition, the upper part of the mould (33) must be in raised position. Then, the upper mould (33) is lowered by a rigid bridge consisting of the upper cross beam (34), of the columns with wedges (35) and of the lower cross beam (37). The bridge movement is guaranteed by a ball screw (38) connected with a motor (309) by a belt transmission (310). In practice, the belt (310) through the ball screw (38) induces the revolution of the shaft (380), connected with the ball screw (38) and, consequently, lowers the above-mentioned rigid bridge. In this way, the upper part of the mould (33) is brought into contact with the lower part (32) lying on the table (31) and the mould closing phase can be considered as concluded, in that the mould upper and lower parts (33) and (32) are closed on each other.
Lead screws (311) are used in the locking phase; they are provided with a series of inclined planes that engage the respective planes (350) present on the columns with wedges (35). The rotation of the lead screws (by an angle of 90°, as indicated by arrows F in Fig. 3B), is obtained by a gear motor (314) comprising an electric motor. The kinematic connection between gear motor (314) and lead screws (311) consists of a gear (316), which belongs to a transmission (313) and is hinged with two ends of two connecting rods (312), whose opposed ends are hinged with the lead screws (311).

In this way, with reference to the Fig. 3B, to a clockwise rotation of the gear (316) there corresponds a clockwise rotation of the two lead screws (311): this, for example, determines the closing movement of the mould; similarly, the counter clockwise rotation of the moulds will release the lock of the mould at completed injection. As an example and without limiting other applications, the system can react to an injection load as high as 50 tons. To open the mould at the end of the injection, it must be proceeded in reverse to what described for the closing operation.
In addition, to maintain the closing start position as constant as possible, the injection moulding station is advantageously provided with a gear motor (315) connected with a relative electric motor (351). The gear motor (315) allows regulation of the height of the moulds through two threads (not illustrated) present on the columns with wedges (35), thus maintaining the locking position constant, a gear transmission being provided between the electric motor (351) and the said threads.

This type of mould locking feature is a novelty for this type of machines, which usually receive power via toggle lever systems or via direct power transmission.
As concerns the blow moulding station (4), the blow mould closing system is built in an analogous way as described for the injection moulding station (3); one difference consists in the size of the motor that drives the mould locking elements; in fact, this motor is remarkably smaller because of the lower power needed. As a non limitative example, the maximum load capacity of the system is 10 tons. Also in this case, the mould locking system is a novelty for this type of machines, which usually receive power by means of toggle lever systems or by direct power transmission.
The handling index table (5) has the function to convey the product through the various processing phases, making it transit between the different operating stations of the machine.

The index table (5) includes an upper part (51) that supports a bar (52); this bar carries more than one male rod (53). Each male rod (53) present in the injection moulding station (3), in a way in itself known, has the task of acting as the internal shape around which the plastic material, injected into the mould, spreads.
In practice, in the injection phase, the male rod (53) appears interposed between the upper half (33) and the lower half (32) of the injection mould. In the blow moulding station (4), the task of the male rod (53) is to support the container and to act as a blowing nozzle, whereas in the unloading station (4) it has the task of supporting the finished container.

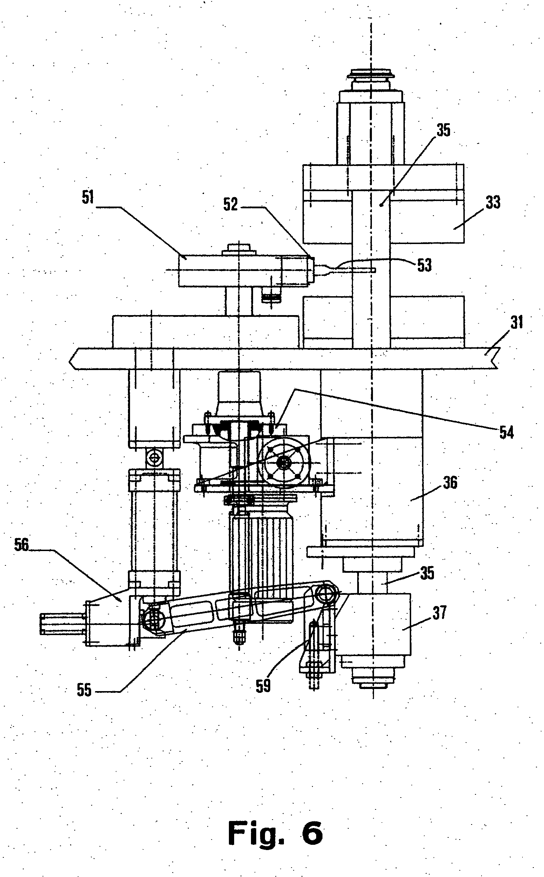

From a functional point of view, the product handling function of the index table (5) is substantially the same as in the machines of the known technique. In practice, the index table (5) is provided with handling means that allow the passage of male rods (53) thorough the different processing stations. This purpose is achieved by an indexer gear box (54) with a relative motor (540) for the index table rotary motion drive; they determine the rotary motion of the index table in known manner. For the vertical motion of the index table (5), levers (55) connect the index table (5) with a bracket (59) (visible in Fig. 6 in proximity to the lower cross beam (37)) of the injection moulding station (3). In this way, the same electrical motor (314) that drives the injection mould locking system is used. The lowering movement of the index table (5) can be advantageously achieved by a cylinder (56), that can be operated via appropriate means of actuation when manual intervention is called for.
As concerns the unloading station (6), this station, as mentioned before, has the task of extracting the finished containers from the male rods and of unloading the containers by dropping them. The unloading station functions in the same way as foreseen on machines of the know technique and, for this reason, is not described in detail.

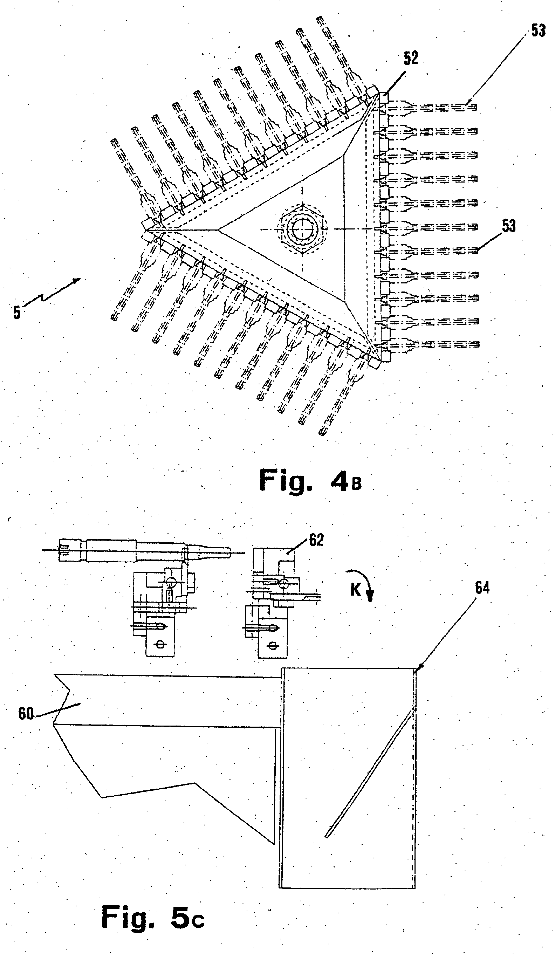

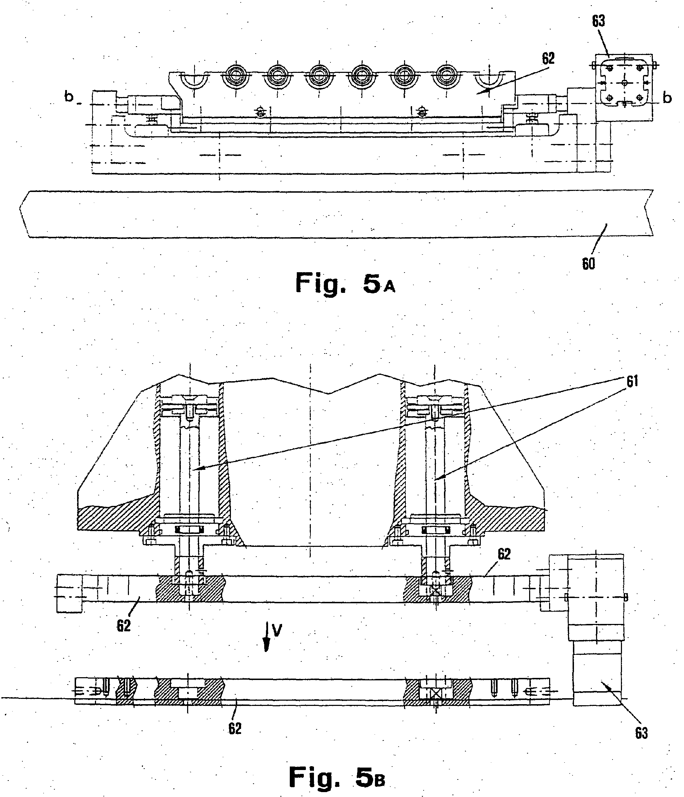

In Figs. 5A-C there can be seen extraction cylinders (61), an extractor bar (62), a cylinder (63) for the rotation of extractor bar (62) and a portion of the limit stop (64) for the containers; a fixed part of the machine has been assigned the position (60).
During the unloading process, the extractor cylinders (61) command the traverse movement of the extractor bar (62) which, in turn, extracts the containers from the relative male rods (53) and brings them to the unloading position. The traverse movement is indicated by an arrow (V) in Fig. 5B. Then, the containers are rotated by the cylinder (63) around the axis (b-b) and arranged vertically; the rotation operated by the cylinder (63) is represented by an arrow (K) in Fig. 5C. The extractor cylinders (61) are then retracted and the mechanical contact between the container and the unloading stop limit (64) allows the containers to be removed from the extractor bar (62).
The unloading station drive cylinders are of pneumatic type; therefore, also in this station there are no hydraulic drive components installed.

## Claims

1. Injection blow moulding machine for plastic objects, comprising:
- a plasticiser/injector assembly (2), which serves for fluidising a raw material and injecting it into an injection mould;
- an injection station (3), where an intermediate product is formed;
- a blow station (4), where the intermediate product receives its final shape;
- means of handling (5) the forming product;
- means of unloading (6) the finished product;
- machine **characterised by the fact** that said plasticiser/injector assembly (2), said injection station (3), said blow moulding station (4) and said handling means (5) are actuated by electric motors.

2. Machine for moulding plastic objects according to claim 1, **characterised by** the fact that said plasticiser/injector assembly (2) is provided with plasticising means comprising a reciprocating screw (21) enclosed in a hollow body (22) which is heated by heating means, the reciprocating screw being put in rotation electrically.

3. Machine for moulding plastic objects according to claim 1, **characterised by** the fact that said plasticiser/injector assembly (2) is provided with injection elements comprising a reciprocating screw (21) moving axially inside a hollow body (22), open in correspondence to an injection nozzle (29) and driven by a corresponding electric motor via a ball screw (28).

4. Machine for moulding plastic objects according to claim 1, **characterised by** the fact that said injection station (3) includes a mould supporting table (31), which supports the lower part of an injection mould (32), an upper cross beam (34) supporting the upper part of the injection mould (33), and a lower cross beam (37) connected with the upper one (34); said cross beams (34, 37) being connected via a ball screw (38) with an electric motor (309) that moves said cross beams (34, 37) during the mould opening and closing phases.

5. Machine for moulding plastic objects according to claim 1, **characterised by** the fact that said mould locking elements present in the injection station (3) include a gear motor (314), connected kinematically with the relative lead screws (311) provided with a variety of inclined planes that, during the mould locking stage, engage a corresponding number of planes (350) present on columns with wedges (35), along which there moves at least one part (33) of the injection mould.

6. Machine for moulding plastic objects according to claim 1, **characterised by** the fact that said blow station (4) comprises a table that supports moulds; this table supports the lower part of a blow mould, an upper cross beam that supports the upper part of the mould; these cross beams being connected via a ball screw with an electric motor that moves them in the mould opening and closing phases.

7. Machine for moulding plastic objects according to claim 1, **characterised by** the fact that said mould locking elements present in the blow station (4) comprise a gear motor connected kinematically with the relative lead screws provided with a variety of inclined planes that, during the mould locking stage, engage a corresponding number of planes present on columns with wedges, along which at least one part of the blow mo7uld moves.

8. Machine for moulding plastic objects according to claims 4 and/or 6, **characterised by** the fact that, in correspondence with each upper cross beam supporting the moulds there is a gear motor (315), connected with an electric motor (351), which makes it possible to regulate the height of the moulds while maintaining the locking position constant.

9. Machine for moulding plastic objects according to claim 1, **characterised by** the fact that said handling means (5) are of the index table type, provided with elements for rotary and vertical movement, said elements for the vertical movement of the index table (5) being connected with the above mentioned drive motors of the injection moulding station (3).

10. Machine for moulding plastic objects according to claim 1, **characterised by** the fact that said unloading station (6) is provided with handling means of pneumatic type.
